# EUROPÄISCHE PATENTSCHRIFT

(11) **EP 2 041 762 B1**
(45) Veröffentlichungstag und Bekanntmachung des Hinweises auf die Patenterteilung: **16.07.2014**
(21) Anmeldenummer: 07724510.8
(22) Anmeldetag: 24.04.2007
(51) Int. Cl.: H01H 27/06, E05B 47/06, F16P 3/08

(54) **VORRICHTUNG ZUM ÜBERWACHEN DES ZUSTANDES EINER SCHUTZEINRICHTUNG EINER MASCHINE**
APPARATUS FOR MONITORING THE STATE OF A PROTECTIVE DEVICE OF A MACHINE
DISPOSITIF DE SURVEILLANCE DE L'ETAT D'UN DISPOSITIF DE PROTECTION D'UNE MACHINE

(30) Priorität: 19.07.2006 DE 102006033355
(43) Veröffentlichungstag der Anmeldung: 01.04.2009
(73) Patentinhaber: EUCHNER GmbH + Co. KG, 70771 Leinfelden-Echterdingen (DE)
(72) Erfinder: BÄCHLE, Erik, 70794 Filderstadt (DE); LINK, Walter, 71277 Rutesheim (DE)
(74) Vertreter: Crazzolara, Helmut
(86) Internationale Anmeldenummer: PCT/EP2007/003580
(87) Internationale Veröffentlichungsnummer: WO 2008/009319

(56) Entgegenhaltungen:
- EP-A- 1 741 855
- EP-A1- 0 871 189
- EP-A2- 0 563 774
- DE-A1- 19 525 083
- DE-A1-102004 047 574
- US-A1- 2004 217 834

## Beschreibung

Die Erfindung betrifft eine Vorrichtung zum Überwachen des Zustandes einer Schutzeinrichtung einer Maschine, insbesondere einen Sicherheitsschalter zum Überwachen des geschlossenen Zustandes einer Schutztür oder dergleichen, mit einer Zuhaltefunktion für die Schutzeinrichtung.

Aus der DE 43 28 297 C1 ist ein Sicherheitsschalter bekannt, in dessen Schalterkopf ein beispielsweise an einer Schutztür einer Schutzeinrichtung festgelegter Betätiger eintreten kann und dabei ein Schaltrad dreht. Innerhalb des Schaltergehäuses ist ein Schaltstößel in Anlage an der Umfangsfläche des Schaltrades gehalten. Bei einem Drehwinkel, welcher der geschlossenen Position der Schutztür entspricht, rastet der Schaltstößel in eine hierfür auf der Umfangsfläche des Schaltrades vorgesehene Rastvertiefung ein und schließt dadurch ein Kontaktpaar. Auf diese Weise ist der eingeführte Zustand des Betätigers und mithin die geschlossene Position der Schutztür elektrisch signalisierbar.

Für viele Anwendungen, beispielsweise bei Schutzhauben an Werkzeugmaschinen oder dergleichen, ist es erforderlich, dass der Sicherheitsschalter zudem eine Zuhaltefunktion bereitstellt, d. h. dass der Betätiger in dem Schalterkopf arretierbar ist, insbesondere hinsichtlich des Herausführens aus dem Schalterkopf arretierbar ist, und dadurch die Schutzeinrichtung in dem geschlossenen Zustand arretierbar ist. Bei dem bekannten Sicherheitsschalter wird hierzu der Schaltstößel federkraftbelastet oder magnetkraftbelastet in der Rastvertiefung gehalten, und somit eine Drehbewegung der Kurvenscheibe blockiert.

Für einige Anwendungen ist es beispielsweise aus Brandschutzgründen erforderlich, etwa wenn in einem Störfall die elektrische Spannungsversorgung der Maschinen abgeschaltet wird, dass die Schutzeinrichtung im geschlossenen Zustand, beispielsweise in der geschlossenen Position der Schutztür oder dergleichen, arretiert ist. Dadurch ergibt sich das Problem, dass bei einem sonstigen stromlosen Zustand der Vorrichtung, beispielsweise anlässlich von Reinigungsarbeiten am Wochenende, bei einem unbeabsichtigten oder unbedachten Schließen der Schutzeinrichtung die Zuhalteeinrichtung aktiviert wird und dadurch die Schutzeinrichtung im dann unerwünschten geschlossenen Zustand arretiert bzw. zugehalten ist. Die Forderung nach einer "Zuhaltung im stromlosen Zustand" und gleichzeitiger "Verhinderung der Aktivierung der Zuhaltung im stromlosen Zustand" stellt mithin für gattungsgemäße Vorrichtungen einen scheinbar unüberwindlichen Widerspruch dar.

Aus der DE 10 2004 047 574 A1 ist eine Lösung für dieses Problem bekannt, bei der ein Blockierelement quer verschiebbar zu dem Zuhalteelement gelagert ist und in einer das Zuhalteelement fixierenden Stellung mit Formschluss in eine Ausnehmung im Zuhalteelement eingreift. Diese bekannte Lösung bedingt eine größere Bauform der Vorrichtung. Aus der US 2004/0217834 A1 ist eine Vorrichtung mit einem Elektromagneten bekannt, der neben einer Spule einen entlang der Spulenachse beweglichen Eisenkern und einen feststehenden, die Spule radial außen umfassenden und die beiden axialen Enden der Spule abdeckenden Eisenkern aufweist. Zwischen dem beweglichen und dem feststehenden Eisenkern ist ein Permanentmagnet angeordnet, der in Bezug auf die Bewegungsrichtung des beweglichen Eisenkerns axial magnetisiert ist.

Der Erfindung liegt die Aufgabe zugrunde, eine gattungsgemäße Vorrichtung bereitzustellen, welche die Nachteile des Standes der Technik überwindet. Insbesondere soll eine Vorrichtung mit einer Zuhalteeinrichtung bereitgestellt werden, die sowohl die Funktion "Zuhaltung im stromlosen Zustand" als auch die Funktion "Verhinderung der Aktivierung der Zuhaltung im stromlosen Zustand" mit einer reduzierten Baugröße realisiert. In einer Ausführungsart soll dauerhaft zuverlässig eine exakte Zuhaltung gewährleistet sein und dabei große Zuhaltekräfte mit konstruktiv einfachen Mitteln kostengünstig und robust bereitgestellt werden. Die Herstellung, Montage und Wartung der Vorrichtung soll vereinfacht und dadurch zeit- und kostensparend sein.

Diese Aufgabe ist durch die im Anspruch 1 bestimmte Vorrichtung gelöst. Besondere Ausführungsarten der Erfindung sind in den Unteransprüchen bestimmt.

Erfindungsgemäß weist die Vorrichtung mindestens einen Permanentmagneten auf, dessen Magnetkraft ausreichend ist, das Zuhalteelement gegebenenfalls auch gegen die Wirkung einer weiteren Kraft zu fixieren, die beispielsweise von einem Federelement auf das Zuhalteelement ausgeübt wird. In einer Ausführungsart fixiert der Permanentmagnet das Zuhalteelement in einer ersten Position, in der die Zuhalteeinrichtung den geschlossenen Zustand der Schutzeinrichtung arretiert, beispielsweise indem der Betätiger in dem Schalterkopf arretiert ist und nicht aus dem Schalterkopf herausgeführt werden kann, sofern sich das Zuhalteelement bei einer Abschaltung der Energieversorgung der Vorrichtung in oder nahe dieser ersten Position befindet.

In einer Ausführungsart fixiert der Permanentmagnet das Zuhalteelement in einer zweiten Position, in der die Zuhalteeinrichtung den geschlossenen Zustand der Schutzeinrichtung nicht arretiert, sofern sich das Zuhalteelement zum Zeitpunkt der Abschaltung der Energieversorgung der Vorrichtung in oder nahe dieser zweiten Position befindet.

Es ist auch eine Ausführungsart möglich, in welcher der Permanentmagnet das Zuhalteelement sowohl in der ersten Position als auch in der zweiten Position fixiert, je nachdem in welcher Position sich das Zuhalteelement zum Zeitpunkt der Abschaltung der Energieversorgung der Vorrichtung befindet.

Es können auch zwei oder mehrere Permanentmagneten vorgesehen sein, wobei durch einen ersten Permanentmagneten das Zuhalteelement in der ersten Position fixierbar ist, und durch einen zweiten Permanentmagneten das Zuhalteelement in der zweiten Position fixierbar ist.

Für das Zusammenwirken des Zuhalteelements mit dem Permanentmagneten ist das Zuhalteelement mindestens abschnittsweise magnetisierbar ausgebildet und weist beispielsweise einen ersten, vorzugsweise zylindrischen Abschnitt aus einem magnetisierbaren Werkstoff auf. Das Zuhalteelement kann gleichzeitig mit dem Stößel zum Betätigen eines elektrischen Schaltelements der Vorrichtung in Wirkverbindung stehen, insbesondere Teil des Stößels sein oder einen Abschnitt des Stößels bilden, oder der Stößel und das Zuhalteelement sind einstückig ausgebildet.

In einer Ausführungsart ist das Zuhalteelement linear beweglich in der Vorrichtung und insbesondere in der Zuhalteeinrichtung gelagert. Beispielsweise kann das Zuhalteelement die Form eines langgestreckten Zylinders aufweisen und entlang seiner Längsachse beweglich gelagert sein. In einer Ausführungsart weist das Zuhalteelement Abschnitte mit unterschiedlicher radialer Ausdehnung auf.

In einer Ausführungsart umgreift der Permanentmagnet das Zuhalteelement und ist vorzugsweise ringförmig ausgebildet. Der Permanentmagnet ist erfindungsgemäß radial in Bezug auf die Bewegungsrichtung des Zuhalteelements magnetisiert. Der von dem Permanentmagneten hervorgerufene magnetische Fluss fließt jedenfalls teilweise und jedenfalls in der ersten oder zweiten fixierten Position durch das Zuhalteelement und übt dadurch die das Zuhalteelement fixierende Kraft aus.

In einer Ausführungsart weist der Permanentmagnet einen Fangbereich auf. Sobald das Zuhalteelement in den Fangbereich bewegt wird, übt der Permanentmagnet eine Kraft auf das Zuhalteelement aus, durch die das Zuhalteelement in die erste oder zweite Position überführt wird und dort fixiert wird. Die geometrische Anordnung des Permanentmagneten in Bezug auf das Zuhalteelement ist dabei vorzugsweise so gewählt, dass durch den Eintritt des Zuhalteelements in dem Fangbereich des Permanentmagneten die das Zuhalteelement in die fixierende Position überführende Kraft im Verlauf der Überführungsbewegung größer wird.

In einer Ausführungsart weist die Zuhalteeinrichtung mindestens einen Elektromagneten auf, durch dessen Bestromung die Fixierung des Zuhalteelements aufhebbar ist. Hierzu kann der Elektromagnet derart bestromt werden, insbesondere mit einem Gleichstrom in der geeigneten Stromrichtung bestromt werden, dass der durch den Elektromagneten hervorgerufene magnetische Fluss den durch den Permanentmagneten hervorgerufenen magnetischen Fluss reduziert oder sogar im Wesentlichen vollständig kompensiert. Dadurch reicht die von dem Permanentmagneten auf das Zuhalteelement ausgeübte Kraft nicht mehr aus, um das Zuhalteelement in der Position zu fixieren. Das Zuhalteelement kann daraufhin beispielsweise aufgrund der von einem Kraftspeicher ausgeübten Kraft aus der fixierten Position herausbewegt werden.

In einer Ausführungsart ist durch die Bestromung des Elektromagneten die auf das Zuhalteelement ausgeübte Magnetkraft erhöhbar. Dadurch kann beispielsweise das Zuhalteelement aufgrund der Magnetkraft des Elektromagneten in den Fangbereich des Permanentmagneten hineinbewegt werden, gegebenenfalls auch gegen die Wirkung des Kraftspeichers, der beispielsweise als Druckfeder ausgebildet und eine Kraft auf das Zuhalteelement entgegen der Magnetkraft des Permanentmagneten ausübt.

In einer Ausführungsart wird das Verstärken oder Abschwächen der durch den Permanentmagneten auf das Zuhalteelement ausgeübten Magnetkraft durch Umschalten der Richtung des Stromflusses durch den Elektromagneten bewirkt. Die Bestromung kann dabei mit einem Dauerstrom erfolgen, wobei der Stromwert einstellbar und regelbar sein kann, beispielsweise um die durch den Elektromagneten auf das Zuhalteelement ausgeübte Magnetkraft variieren zu können. Beispielsweise kann der Elektromagnet kurzzeitig mit einem Überstrom beaufschlagt werden, um das Zuhalteelement in den Fangbereich des Permanentmagneten hineinzuführen und/oder um das Zuhalteelement aus dem Fangbereich herauszuführen. Die Bestromung kann auch gepulst erfolgen, wobei die Amplitude der Strompulse und/oder die Zeitdauer der Strompulse steuerbar sein kann, um die von dem Elektromagneten auf das Zuhalteelement ausgeübte Magnetkraft variieren zu können.

In einer Ausführungsart ist durch die Bestromung des Elektromagneten das Zuhalteelement von der ersten in die zweite Position überführbar und/oder von der zweiten Position in die erste Position überführbar. Hierzu kann im einfachsten Fall ein einziger Elektromagnet verwendet werden, der in der einen oder der anderen Stromrichtung bestrombar ist. In einer Ausführungsart weist die Vorrichtung zwei oder mehr Elektromagneten auf, und durch die Bestromung eines ersten Elektromagneten ist das Zuhalteelement von der ersten in die zweite Position überführbar, und durch die Bestromung eines zweiten Elektromagneten ist das Zuhalteelement von der zweiten in die erste Position überführbar. Gleichzeitig kann durch einen der Elektromagneten die durch den Permanentmagneten auf das Zuhalteelement ausgeübte Magnetkraft variiert werden, insbesondere herabgesetzt werden.

In einer Ausführungsart ist der Elektromagnet als Spule ausgebildet, in dessen Inneren das Zuhalteelement längsbeweglich gelagert ist. Der Permanentmagnet ist an den Elektromagneten angrenzend angeordnet, insbesondere in dem den magnetischen Fluss führenden Kern des Elektromagneten angeordnet. In einer Ausführungsart ist der Permanentmagnet in einem Joch des Elektromagneten angeordnet.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine schematische Draufsicht auf eine Gesamtanordnung mit einer erfindungsgemäßen Vorrichtung,
- Fig. 2: zeigt eine detailliertere Draufsicht auf ein erstes Beispiel,
- Fig. 3 bis 8: zeigen unterschiedliche Zustände des Beispiels der Fig. 2,
- Fig. 9: zeigt einen vergrößerten Ausschnitt eines zweiten Beispiels, und
- Fig. 10: zeigt einen vergrößerten Ausschnitt eines erfindungsgemäßen Ausführungsbeispiels.

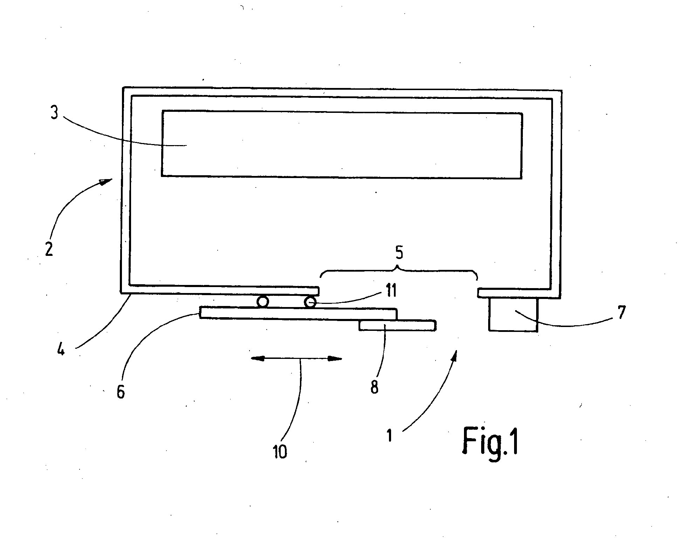

Die Fig. 1 zeigt eine schematische Draufsicht auf eine Gesamtanordnung mit einer erfindungsgemäßen Vorrichtung 1 zum Überwachen des Zustandes einer Schutzeinrichtung 2 einer Maschine 3, insbesondere des geschlossenen Zustandes einer Schutztür, mit der eine Raumtrenneinrichtung verschließbar ist, um beispielsweise das Bedienpersonal vor einer Gefährdung durch die im Betrieb befindliche Maschine 3 zu schützen. Die Einrichtung 2 weist ein erstes Teil 4 auf, beispielsweise einen Rahmen für die Schutzeinrichtung 2. Das erste Teil 4 weist eine Öffnung 5 auf, die durch ein zweites Teil 6 schließbar ist, beispielsweise durch eine Schutztür, die entsprechend dem Doppelpfeil 10 gegenüber dem ersten Teil 4 bewegbar ist und durch Lagerelemente 11 beweglich gelagert ist. Die Vorrichtung 1 weist einen Sicherheitsschalter auf, der ein vorzugsweise am feststehenden ersten Teil 4 der Schutzeinrichtung 2 angeordnetes Schalterelement 7 und einen vorzugsweise am beweglichen zweiten Teil 6 angeordneten Betätiger 8 umfasst.

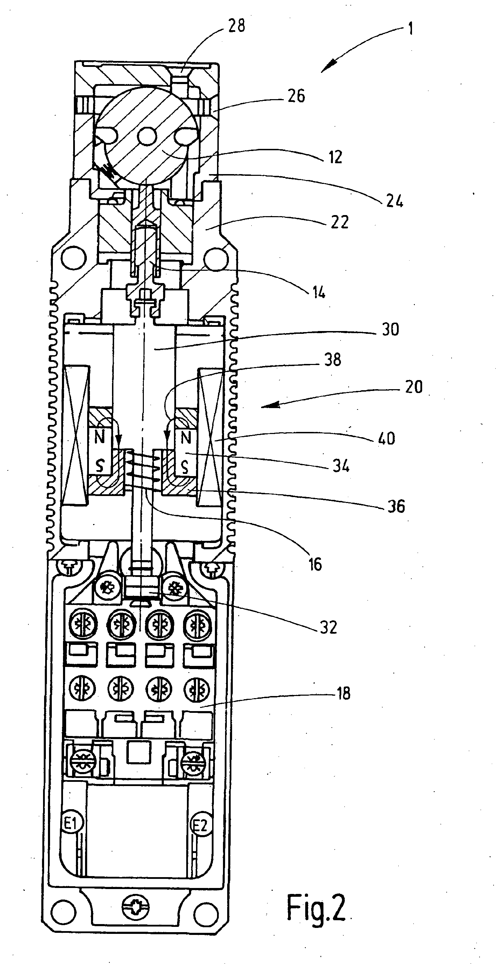

Bei den in den Figuren 2 bis 9 gezeigten Beispielen handelt es sich nicht um Ausführungsformen der Erfindung, sondern um Beispiele, die das Verständnis der Erfindung erleichtern.

Die Fig. 2 zeigt eine detailliertere Draufsicht auf ein erstes Beispiel der Vorrichtung 1 mit einem Schaltergehäuse 22 und einem daran festgelegten Schalterkopf 24, der zwei Einführkanäle 26, 28 zum Einführen des Betätigers 8 (Fig. 1) aufweist, die im Wesentlichen äquidistant zu einer Kante des im Wesentlichen kubischen Schalterkopfes 24 angeordnet und rechtwinklig zueinander ausgerichtet sind. In dem Schalterkopf 24 ist ein Schaltrad 12 um eine senkrecht zur Zeichenebene ausgerichtete Achse drehbar gelagert angeordnet, das in die beiden Einführkanäle 26, 28 hineinragt und durch ein Einführen des Betätigers 8 in einen der Einführkanäle 26, 28 drehbar ist. An dem Schaltrad 12 ist ein Stößel 14 mittels eines sich in dem Schaltergehäuse 22 abstützenden Kraftspeichers 16 in Anlage gehalten. Der Schaltstößel 14 betätigt ein elektrisches Schaltelement 18, das in einem dem Schalterkopf 24 gegenüberliegenden Abschnitt des Schaltergehäuses 22 angeordnet ist.

Zwischen dem Schalterkopf 24 und dem Schaltelement 18 ist im Schaltergehäuse 22 eine Zuhalteeinrichtung 20 angeordnet, die ein entlang seiner Längsachse beweglich gelagertes Zuhalteelement 30 aufweist, das abschnittsweise zylindrisch ist und insbesondere in einem verdickten Abschnitt mindestens teilweise aus einem magnetisierbaren Werkstoff gebildet ist. An seinem dem Schalterkopf 24 zugewandten Ende ist das Zuhalteelement 30 formschlüssig mit einem ersten Abschnitt des Stößels 14 verbunden, der in seiner weiteren Verlängerung an dem Schaltrad 12 in Anlage ist. An seinem dem Schaltelement 18 zugewandten Ende ist das Zuhalteelement 30 mit einem verjüngten zylindrischen Abschnitt in Anlage an einem Betätigungsstößel 32 des Schaltelements 18.

Ein Kraftspeicher 16 stützt sich an einer Schulter des Zuhalteelements 30 ab, das durch den Übergang von dem verjüngten zylindrischen Abschnitt zu dem verdickten; den magnetisierbaren Werkstoff aufweisenden Abschnitt des Zuhalteelements 30 gebildet ist. Ausgehend von dem verjüngten Abschnitt ist der Übergang zunächst rechtwinklig, um anschließend in einen konischen Abschnitt überzugehen, der an seinem aufgeweiteten Ende in den anschließenden verdickten Abschnitt des Zuhalteelements 30 übergeht.

Die Zuhalteeinrichtung 20 weist einen Permanentmagneten 34 auf, der in axialer Richtung bezogen auf die Bewegungsrichtung des Zuhalteelements 30 magnetisiert ist und in einen den magnetischen Fluss leitenden Polkern 36 eingesetzt ist. Der Permanentmagnet 34 oder der Polkern 36 schließen nur durch einen kleinen Luftspalt getrennt an das Zuhalteelement 30 an, insbesondere an den verdickten Abschnitt des Zuhalteelements 30. Dadurch entsteht ein durch die Feldlinie 38 angedeuteter magnetischer Fluss, der aus dem Permanentmagneten 34 unmittelbar oder über den Polkern 36 in das Zuhalteelement 30 eintritt, abschnittsweise das Zuhalteelement 30 durchdringt und anschließend wieder in den Polkern 36 oder unmittelbar in den Permanentmagneten 34 eintritt. Dadurch übt der Permanentmagnet 34 eine den Luftspalt schließende Magnetkraft auf das Zuhalteelement 30 aus und wirkt damit der von dem Kraftspeicher 16 ausgeübten Kraft entgegen und fixiert das Zuhalteelement 30 in der dargestellten Position, in welcher die Zuhalteeinrichtung 20 das Schaltrad 12 nicht arretiert, sodass ein Betätiger 8 in den Schalterkopf 24 eingeführt werden könnte, ohne dass die Zuhaltung aktiviert wird.

Radial in Bezug auf die Bewegungsrichtung des Zuhalteelements 30 außerhalb des Permanentmagneten 34 ist ein Elektromagnet 40 angeordnet, der steuerbar bestrombar ist, wobei die Richtung des Stromflusses umkehrbar ist. Insbesondere kann die Richtung des Stromflusses durch den Elektromagneten 40 entweder derart gewählt werden, dass sich der dadurch ergebende magnetische Fluss dem von dem Permanentmagneten 34 hervorgerufenen magnetischen Fluss entgegenwirkt, oder derart gewählt werden, dass der magnetische Fluss des Elektromagneten 40 den magnetischen Fluss des Permanentmagneten 34 verstärkt.

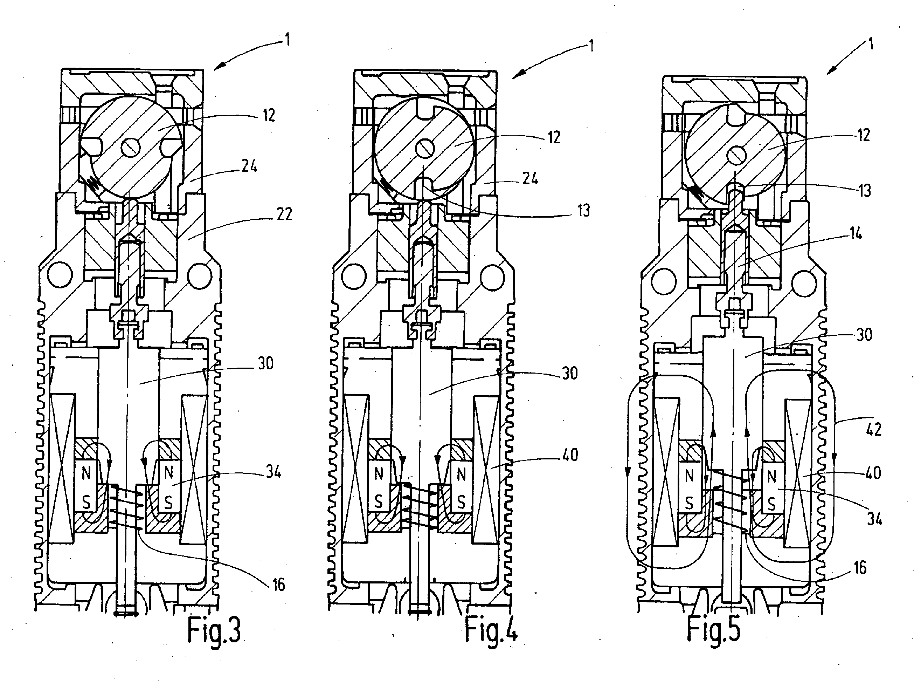

Die Fig. 3 bis 8 zeigen unterschiedliche Zustände des Beispiels der Fig. 2. Hierzu ist von der Vorrichtung 1 in den Fig. 3 bis 8 jeweils nur der obere Teil des Schaltergehäuses 22 vergrößert dargestellt; der untere Teil des Schaltergehäuses 22 ist jeweils so ausgebildet, wie dies in der Fig. 2 dargestellt ist.

In der Fig. 3 ist der auch in der Fig. 2 dargestellte Ausgangszustand dargestellt, in dem der Betätiger 8 nicht in den Schalterkopf 24 eingeführt ist und durch die Magnetkraft des Permanentmagneten 34 das Zuhalteelement 30 in einer Position fixiert ist, in der das Zuhalteelement 30 das Schaltrad 12 nicht arretiert. Dieser Zustand wird auch beibehalten, wenn die Energieversorgung der Vorrichtung 1 abgeschaltet wird.

Es handelt sich dabei um einen stabilen Zustand, da die von dem Permanentmagneten 34 aufgebrachte Magnetkraft größer ist als die in Gegenrichtung auf das Zuhalteelement 30 einwirkende Kraft des Kraftspeichers 16.

Wenn ausgehend von der in der Fig. 3 dargestellten Position der Betätiger 8 in den Schalterkopf 24 eingeführt wird, wird dadurch das Schaltrad 12 um etwa 90° entgegen dem Uhrzeigersinn in der Darstellung der Fig. 3 gedreht, sodass sich für das Schaltrad 12 die in der Fig. 4 dargestellte Stellung ergibt. Nach wie vor ist der Elektromagnet 40 nicht bestromt, sodass das Zuhalteelement 30 in seiner fixierten Position verbleibt und das Schaltrad 12 nicht blockiert ist. Dementsprechend arretiert die Zuhalteeinrichtung den geschlossenen Zustand der Schutzeinrichtung 2 nicht. Vielmehr könnte die Schutztür wieder geöffnet werden und der Betätiger 8 aus dem Schalterkopf 24 herausgeführt werden.

Wird der Elektromagnet 40 in geeigneter Stromrichtung bestromt, schwächt der in der Fig. 5 durch die Feldlinie 42 dargestellte magnetische Fluss die fixierende Wirkung des Permanentmagneten 34 auf das Zuhalteelement 30, weil der durch den Elektromagneten 40 bewirkte magnetische Fluss im Bereich des Zuhalteelements 30 dem durch den Permanentmagneten 34 bewirkten magnetischen Fluss entgegengerichtet ist. Dadurch wird die magnetische Wirkung des Permanentmagneten 34 auf das Zuhalteelement 30 aufgehoben oder jedenfalls so stark reduziert, dass nun die von dem Kraftspeicher 16 ausgeübte Kraft überwiegt und das Zuhalteelement 30 in die in der Fig. 5 dargestellte Position bewegt wird, in welcher das Zuhalteelement 30 bzw. seine axiale Verlängerung durch den Stößel 14 in eine Ausnehmung 13 im Schaltrad 12 eingreift und dieses gegen eine weitere Drehbewegung blockiert.

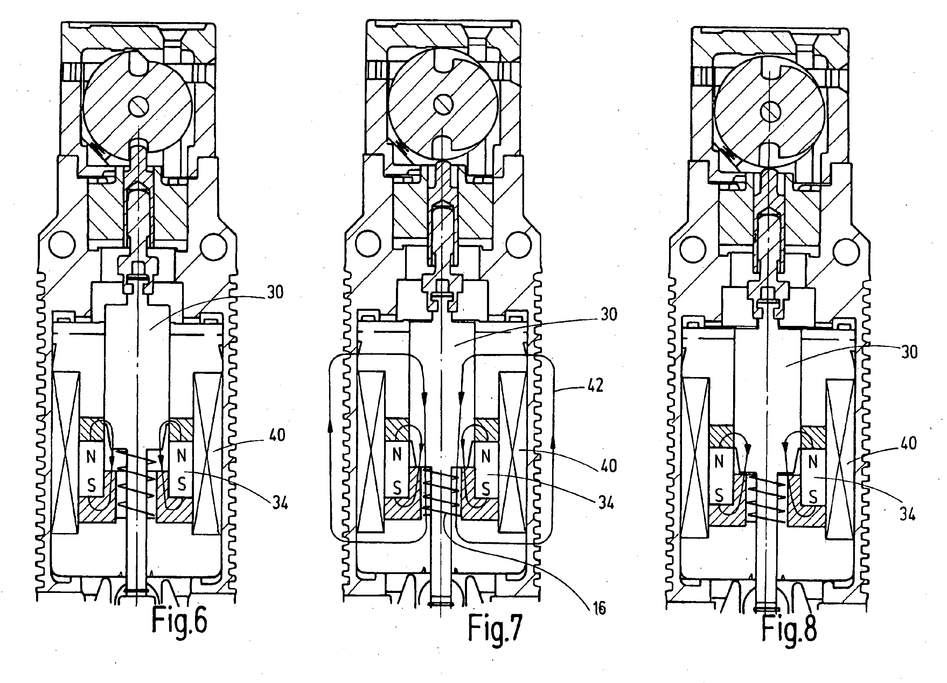

In diesem Zustand ist das Zuhalteelement 30 in einer Position fixiert, in der die Zuhalteeinrichtung 20 den geschlossenen Zustand der Schutzeinrichtung 2 arretiert. Dieser Zustand wird auch dann beibehalten, wenn die Bestromung des Elektromagneten 30 abgeschaltet wird, wie sich aus der Fig. 6 ergibt. Zwar wirkt in diesem Fall noch der Permanentmagnet 34, und möglicherweise kommt es auch zu einem magnetischen Fluss durch das Zuhalteelement 30, dieser ist jedoch aufgrund dessen, dass sich der verdickte Abschnitt des Zuhalteelements 30 außerhalb des Fangbereichs des Permanentmagneten 34 befindet, zu klein, um gegen die Wirkung des Kraftspeichers 34 eine Bewegung des Zuhalteelements 30 zu bewirken.

Erst durch eine Bestromung des Elektromagneten 40 in geeigneter Richtung, wie dies durch die Feldlinie 42 in der Fig. 7 dargestellt ist, kann eine Magnetkraft auf das Zuhalteelement 30 ausgeübt werden, die größer ist als die Kraft des Kraftspeichers 16. Dementsprechend wird das Zuhalteelement 30 wieder in Richtung des Permanentmagneten 34 bewegt, insbesondere bis in den Fangbereich des Permanentmagneten 34 hinein, in dem die von dem Permanentmagneten 34 ausgeübte Kraft auf das Zuhalteelement 30 ausreicht, um dieses in die in der Fig. 7 dargestellte Position zu überführen und dort zu fixieren, selbst dann, wenn die Bestromung des Elektromagneten 40 abgeschaltet wird, wie in der Fig. 8 dargestellt.

In diesem Zustand kann der Betätiger 8 aus dem Schalterkopf 24 herausgeführt werden, sodass sich wiederum der in der Fig. 3 dargestellte Ausgangszustand ergibt.

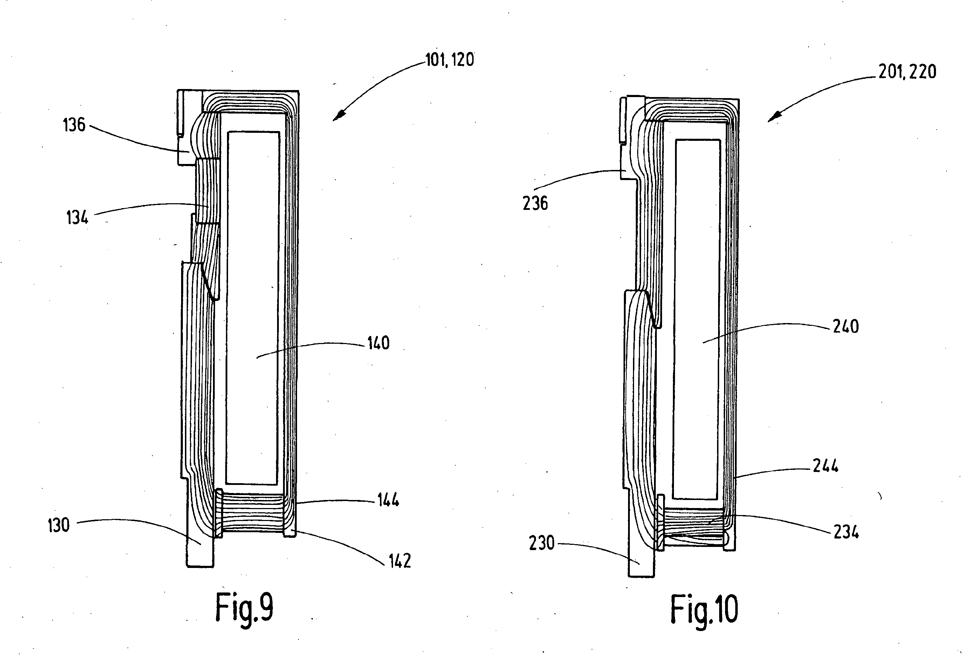

Die Fig. 9 zeigt einen vergrößerten Ausschnitt eines zweiten Beispiels insbesondere der Zuhalteeinrichtung 120 im Bereich des Elektromagneten 140. Die Wicklung des Elektromagneten 140 ist von einem den magnetischen Fluss gut leitenden magnetischen Kern 144 umgeben, in dem der magnetische Fluss geführt ist, wie durch die Feldlinien 142 dargestellt. An einer dem Zuhalteelement 130 zugewandten Seite ist an dem Elektromagneten 140 der Permanentmagnet 134 angeordnet, der in Bezug auf die Bewegungsrichtung des Zuhalteelements 130 in axialer Richtung polarisiert ist und dementsprechend auch von dem magnetischen Fluss durchflossen wird. Der Permanentmagnet 134 ist auf seinen beiden axialen Endseiten in den Polkern 136 eingebettet, der Teil des magnetischen Kerns 144 ist.

Die Fig. 10 zeigt einen vergrößerten Ausschnitt durch ein erfindungsgemäßes Ausführungsbeispiel der Vorrichtung 201 und insbesondere der Zuhalteeinrichtung 220 im Bereich des Elektromagneten 240. Der Permanentmagnet 234 ist an einer Seite angeordnet, welche an die dem Zuhalteelement 230 zugewandten Seite des Permanentmagneten 240 anschließt, und der Permanentmagnet 234 ist in Bezug auf die Bewegungsrichtung des Zuhalteelements 230 radial magnetisiert.

Der Polkern 236 bildet einen Teil oder Abschnitt des den magnetischen Fluss leitenden Kerns 244. Der Permanentmagnet 234 ist wiederum im magnetischen Joch des Elektromagneten angeordnet.

## Patentansprüche

1. Vorrichtung (1, 201) zum Überwachen des Zustandes einer Schutzeinrichtung (2) einer Maschine (4), insbesondere Sicherheitsschalter zum Überwachen des geschlossenen Zustandes einer Schutztür oder dergleichen, wobei die Vorrichtung (1) ein Schaltergehäuse (22) mit einem Schalterkopf (24) und einen Betätiger (8) aufweist, der im geschlossenen Zustand der Schutzeinrichtung (2) mit dem Schalterkopf (24) zusammenwirkt und dadurch der geschlossene Zustand der Schutzeinrichtung (2) signalisierbar ist, und wobei die Vorrichtung (1) eine Zuhalteeinrichtung (20, 220) mit einem in der Vorrichtung (1) bewegbar gelagerten Zuhalteelement (30, 230) aufweist, durch das der geschlossene Zustand der Schutzeinrichtung (2) lösbar arretierbar ist, **dadurch gekennzeichnet, dass** die Zuhalteeinrichtung (20, 220) mindestens einen Permanentmagneten (234) aufweist, durch dessen Magnetkraft das Zuhalteelement (30, 230) bei einer Abschaltung der Energieversorgung der Vorrichtung (1, 201) in einer ersten Position fixierbar ist, in der die Zuhalteeinrichtung (20, 220) den geschlossenen Zustand der Schutzeinrichtung (2) arretiert, und/oder in einer zweiten Position fixierbar ist, in der die Zuhalteeinrichtung (20, 220) den geschlossenen Zustand der Schutzeinrichtung (2) nicht arretiert, und dass der Permanentmagnet (234) in Bezug auf die Bewegungsrichtung des Zuhalteelements (30, 230) radial magnetisiert ist.

2. Vorrichtung (1) nach Anspruch 1, **dadurch gekennzeichnet, dass** das Zuhalteelement (30, 230) linear beweglich gelagert ist, und dass der Permanentmagnet (234) ringförmig ist und das Zuhalteelement (30, 230) umgreift.

3. Vorrichtung (1) nach einem der vorangehenden Ansprüche, **dadurch gekennzeichnet, dass** die Magnetkraft des Permanentmagneten (234) einer von einem Kraftspeicher (16), insbesondere einem Federelement, auf das Zuhalteelement (30, 230) ausgeübten Kraft entgegenwi rkt.

4. Vorrichtung (1) nach einem der vorangehenden Ansprüche, **dadurch gekennzeichnet, dass** der Permanentmagnet (234) einen Fangbereich aufweist und das Zuhalteelement (30, 230) aufgrund seiner Magnetkraft in die fixierte Position überführt, sobald das Zuhalteelement (30, 230) in den Fangbereich des Permanentmagneten (234) eintritt.

5. Vorrichtung (1) nach einem der vorangehenden Ansprüche, **dadurch gekennzeichnet, dass** die Zuhalteeinrichtung (20, 220) mindestens einen Elektromagneten (40, 240) aufweist, durch dessen Bestromung die Fixierung des Zuhalteelements (30, 230) aufgrund der Magnetkraft des Permanentmagneten (234) aufhebbar ist.

6. Vorrichtung (1) nach einem der vorangehenden Ansprüche, **dadurch gekennzeichnet, dass** die Zuhalteeinrichtung (20, 220) mindestens einen Elektromagneten (40, 240) aufweist, durch dessen Bestromung die durch den Permanentmagneten (234) auf das Zuhalteelement (30, 230) ausgeübte Magnetkraft erhöhbar ist.

7. Vorrichtung (1) nach einem der vorangehenden Ansprüche, **dadurch gekennzeichnet, dass** die Zuhalteeinrichtung (20, 220) mindestens einen Elektromagneten (40, 240) aufweist, durch dessen Bestromung das Zuhalteelement (30, 230) von der ersten in die zweite Position und/oder von der zweiten in die erste Position überführbar ist.

8. Vorrichtung (1) nach einem der vorangehenden Ansprüche, **dadurch gekennzeichnet, dass** die Zuhalteeinrichtung (20, 220) mindestens einen Elektromagneten (40, 240) aufweist, der gepulst bestrombar ist.

9. Vorrichtung (1) nach einem der vorangehenden Ansprüche, **dadurch gekennzeichnet, dass** die Zuhalteeinrichtung (20, 220) mindestens einen Elektromagneten (40, 240) aufweist, und dass der Permanentmagnet (234) in dem den magnetischen Fluss führenden Joch des Elektromagneten (40, 240) angeordnet ist.

## Claims

1. An apparatus (1, 201) for monitoring the state of a protective device (2) of a machine (4), in particular a safety switch for monitoring the closed state of a protective door or the like, the apparatus (1) having a switch housing (22) with a switch head (24) and an actuator (8) that interacts with said switch head (24) in the closed state of the protective device (2) and as a result the closed state of the protective device (2) being able to be signalled, and the apparatus (1) having a locking device (20, 220) with a locking element (30, 230) mounted such as to be moveable in the apparatus (1), by means of which the closed state of the protective device (2) can be releaseably locked, **characterised in that** the locking device (20, 220) has at least one permanent magnet (234) by the magnetic force of which, if the power supply to the apparatus (1, 201) is switched off, the locking element (30, 230) can be fixed in a first position in which the locking device (20, 220) locks the closed state of the protective device (2), and/or can be fixed in a second position in which the locking device (20, 220) does not lock the closed state of the protective device (2), and that the permanent magnet (234) is magnetised radially relative to the direction of movement of the locking element (30, 230).

2. The apparatus (1) according to Claim 1, **characterised in that** the locking element (30, 230) is mounted so as to be linearly moveable and that the permanent magnet (234) is ring-shaped and extends around the locking element (30, 230).

3. The apparatus (1) according to any of the preceding claims, **characterised in that** magnetic force of the permanent magnet (234) counteracts a force applied to the locking element (30, 230) by an energy storage mechanism (16), in particular a spring element.

4. The apparatus (1) according to any of the preceding claims, **characterised in that** the permanent magnet (234) has a capture region and transfers the locking element (30, 230) into the fixed position as a result of its magnetic force as soon as the locking element (30, 230) is moved into the capture region of the permanent magnet.

5. The apparatus (1) according to any of the preceding claims, **characterised in that** the locking device (20, 220) has at least one electromagnet (40, 240), by the energising of which the fixing of the locking element (30, 230) can be cancelled as a result of the magnetic force of the permanent magnet (234).

6. The apparatus (1) according to any of the preceding claims, **characterised in that** the locking device (20, 220) has at least one electromagnet (40, 240), by the energising of which the magnetic force applied to the locking element (30, 230) by the permanent magnet (234) can be increased.

7. The apparatus (1) according to any of the preceding claims, **characterised in that** the locking device (20, 220) has at least one electromagnet (40, 240), by the energising of which the locking element (30, 230) can be transferred from the first into the second position and/or from the second into the first position.

8. The apparatus (1) according to any of the preceding claims, **characterised in that** the locking device (20, 220) has at least one electromagnet (40, 240) that can be energised in a pulsed manner.

9. The apparatus (1) according to any of the preceding claims, **characterised in that** the locking device (20, 220) has at least one electromagnet (40, 240), and that the permanent magnet (234) is disposed in the yoke of the electromagnet (40, 240) conducting the magnetic flux.

## Revendications

1. Dispositif (1, 201) de contrôle de l'état d'un dispositif (2) de protection d'une machine (4), notamment commutateur de sécurité pour le contrôle de l'état fermé d'une porte de protection ou analogue, le dispositif (1) ayant un boîtier (22) de commutateur ayant une tête (24) de commutateur et un actionneur (8), qui, lorsque le dispositif (2) de protection est à l'état fermé, coopère avec la tête (24) du commutateur et ainsi l'état fermé du dispositif (2) de protection peut être signalé, et dans lequel le dispositif (1) a un dispositif (20, 220) de maintien ayant un élément (30, 230) de maintien, qui est monté mobile dans le dispositif (1) et par lequel l'état fermé du dispositif (2) de protection peut être bloqué de manière amovible, **caractérisé en ce que** le dispositif (20, 220) de maintien a au moins un aimant (234) permanent, par la force magnétique duquel l'élément (30, 230) de maintien peut, lors de l'interruption de l'alimentation en énergie du dispositif (1, 201), être immobilisé dans une première position, dans laquelle le dispositif (20, 220) de maintien bloque l'état fermé du dispositif (2) de protection, et/ou peut être immobilisé dans une deuxième position, dans laquelle le dispositif (20, 220) de maintien ne bloque pas l'état fermé du dispositif (2) de protection, et **en ce que** l'aimant (234) permanent est aimanté radialement par rapport à la direction de déplacement de l'élément (30, 230) de maintien.

2. Dispositif (1) suivant la revendication 1, **caractérisé en ce que** l'élément (30, 230) de maintien est monté mobile linéairement et **en ce que** l'aimant (234) permanent est annulaire et entoure l'élément (30, 230) de maintien.

3. Dispositif (1) suivant l'une des revendications précédentes, **caractérisé en ce que** la force magnétique de l'aimant (234) permanent s'oppose à une force appliquée par un accumulateur (16) de force, notamment par un élément de ressort à l'élément (30, 230) de maintien.

4. Dispositif (1) suivant l'une des revendications précédentes, **caractérisé en ce que** l'aimant (234) permanent a une zone d'attraction et l'élément (30, 230) de maintien passe, en raison de sa force magnétique, dans la position immobilisée, dès que l'élément (30, 230) de maintien pénètre dans la zone d'attraction de l'aimant (234) permanent.

5. Dispositif (1) suivant l'une des revendications précédentes, **caractérisé en ce que** le dispositif (20, 220) de maintien a au moins un électroaimant (40, 240), par l'alimentation en courant duquel l'immobilisation de l'élément (30, 230) de maintien en raison de la force magnétique de l'aimant (234) permanent peut être supprimée.

6. Dispositif (1) suivant l'une des revendications précédentes, **caractérisé en ce que** le dispositif (20, 220) de maintien a au moins un électroaimant (40, 240), par l'alimentation en courant duquel la force magnétique appliquée à l'élément (30, 230) de maintien par l'aimant (234) permanent peut être augmentée.

7. Dispositif (1) suivant l'une des revendications précédentes, **caractérisé en ce que** le dispositif (20, 220) de maintien a au moins un électroaimant (40, 240), par l'alimentation en courant duquel l'élément (30, 230) de maintien peut passer de la première à la deuxième position et/ou de la deuxième à la première position.

8. Dispositif (1) suivant l'une des revendications précédentes, **caractérisé en ce que** le dispositif (20, 220) de maintien a au moins un électroaimant (40, 240) qui peut être alimenté en courant de manière pulsée.

9. Dispositif (1) suivant l'une des revendications précédentes, **caractérisé en ce que** le dispositif (20, 220) de maintien a au moins un électroaimant (40, 240) et **en ce que** l'aimant (234) permanent est mis dans la culasse, conduisant le flux magnétique, de l'électroaimant (40, 240).
